# EUROPEAN PATENT SPECIFICATION

(11) **EP 2 787 776 B1**
(45) Date of publication and mention of the grant of the patent: **22.06.2016**
(21) Application number: 13290080.4
(22) Date of filing: 05.04.2013
(51) Int. Cl.: H04W 52/02, H04W 84/18

(54) **A telecommunications network, a base station and a method of predicting whether a small cell base station in a group of small cell base stations has a likelihood of being accessed first among the group by user terminals**
Telekommunikationsnetzwerk, Basisstation und Verfahren zur Vorhersage, ob es wahrscheinlich ist, dass auf eine kleinzellige Basisstation in einer Gruppe von kleinzelligen Basisstationen als Erste in der Gruppe von einem Benutzerendgerät zugegriffen wird
Réseau de télécommunications, station de base et procédé permettant de prévoir si une petite station de base cellulaire dans un groupe de petites stations de base cellulaire a une probabilité d'être accédée en premier au sein d'un groupe par des terminaux d'utilisateur

(43) Date of publication of application: 08.10.2014
(73) Proprietor: ALCATEL LUCENT, 92100 Boulogne-Billancourt (FR)
(72) Inventor: Ashraf, Imran, Swindon SN5 7DJ, Wiltshire (GB); Ho, Lester Tse Wee, Blanchardstown, Dublin 15 (IE)
(74) Representative: Sarup, David Alexander

(56) References cited:
- GB-A- 2 292 288
- US-A1- 2009 097 448
- US-A1- 2012 165 005

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, femtocells, or metrocells but we use the term small cells generically for cells that are smaller than macrocells. One way to establish a small cell is to provide a small cell base station that operates within a relatively limited range within the coverage area of a macrocell.

The small cell base station is of a relatively low transmit power and hence each small cell is of a small coverage area compared to a macrocell.

In a known wireless cellular network a group of small cells is provided within a macrocell. The small cell base stations in the group have the same shared location area code (LAC) as each other. This LAC can be different to that of the macrocell.

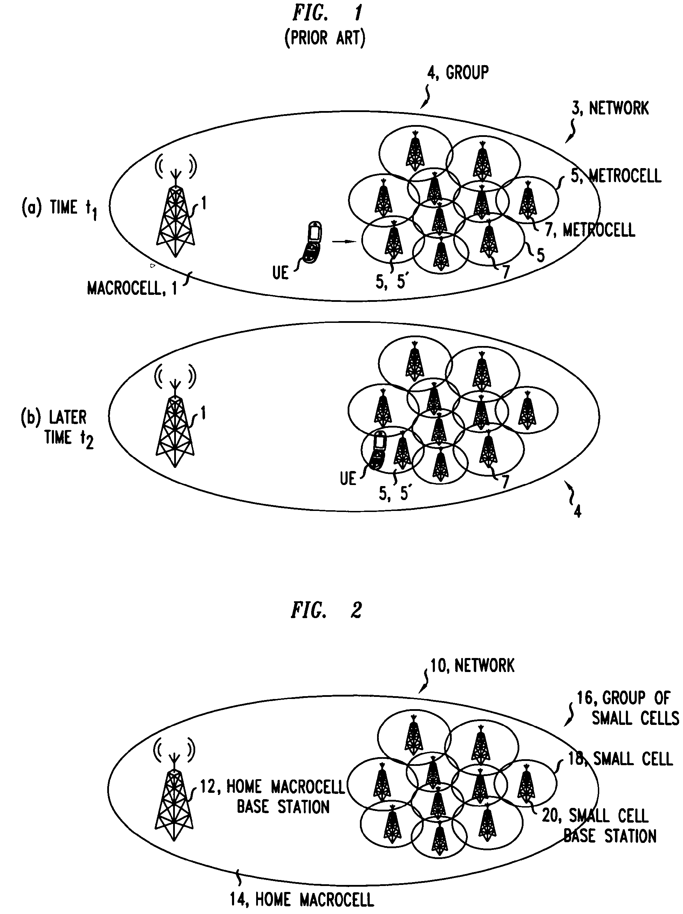

As shown in Figure 1, in such a known wireless cellular network 3, the macrocell base station 1 has a Location Area identified by Location Area Code 1(LAC1). The group 4 of small cells are metrocells, are connected to a shared local gateway (not shown) and share a Location Area and hence a LAC2 which is different to LAC1. In this network the metrocell base stations 7 are active so they would be broadcasting pilot transmissions. A mobile user terminal in idle mode tracks location area, as upon moving, the mobile terminal reselects to a new cell. Cell reselection is where a user terminal changes from being connected to one base station to being connected to another. This is illustrated in Figure 1, where (a) at a first time t1, mobile terminal UE is in the macrocell 1 connected to the macrocell base station 9. Then (b) at a later time t2, as also shown in Figure 1, the mobile terminal UE moves in metrocell 5'. As the Location Area for the metrocell 5' is different to that of the macrocell 1, the mobile terminal UE performs a Location Area Update (LAU) to inform the network 3 of its new Location Area. Specifically, in this example, the mobile terminal UE informs that the mobile terminal UE is now in the location area identified by LAC2.

It is known from United States Patent Publication US2009/097448A1 to provide a method of predicting whether a small cell base station in a group of neighbouring small cell base stations has a likelihood of being accessed first among the group by user terminals

### Summary

The present invention is characterised over the disclosure of US2009/097448A1 in that the group of neighbouring small cell base stations all have the same Location Area Code;
the method comprising:
monitoring the rate of location area updates that the small cell base station receives from user terminals entering the small cell provided by the small cell base station;
determining whether the rate of location area updates exceeds a given threshold; and
upon the rate of location area updates exceeding the given threshold the small cell base station being indicated as having a likelihood of being accessed first among the group by user terminals.

The reader is referred to the appended independent claims. Some preferred features are laid out in the dependent claims.

Preferably the small cell base station determined as having a likelihood of being accessed first among the group by user terminals is so indicated by being denoted a 'border' cell, and is preferably maintained in a high power active state at all times of the day or week.

Preferably upon the rate of location area updates not exceeding the given threshold, the small cell base station is indicated as not having a likelihood of being accessed first among the group by user terminals.

Preferably the small cell base station determined as not having a likelihood of being accessed first among the group by user terminals is so indicated by being denoted an 'inner cell', and is preferably switched to a low power sleeping mode for expected periods of low usage.

Preferably in determining rate of Location Area Updates, Location Area Updates from user terminals that do not indicate their continued presence in the small cell at the end of a measurement period are discarded from the count of LAUs per given period.

Preferably the small cell has a closed subscriber group of user terminals and Location area updates from user terminals that are not in the closed subscriber group are not included in the count.

Preferably each small cell base station determines its own rate of location area updates.

Preferably the group of small cell base stations is provided in a building or other area having restricted access, and at least one small cell base station in the group is indicated as having a likelihood of being accessed first among the group by user terminals and said other small cell base stations in the group are indicated as not having a likelihood of being accessed first among the group by user terminals. Preferably said at least one base station indicated as having a likelihood of being accessed first among the group by user terminals is kept in active mode, and said other small cell base stations indicated as not having a likelihood of being accessed first among the group are at a time in sleeping mode.

Preferably each of the small cells in sleeping mode in the group seeks to detect periodic pilot signals from a small cell base station in active mode in the group, and in the absence of receiving an expected pilot signal, a small cell base station in sleeping mode switches to active mode.

Preferably said at least one base station indicated as having a likelihood of being accessed first among the group by user terminals is located near an entrance to the building or other restricted area, and the other small cell base stations are inside the building or other restricted area further from an entrance. Preferably a user terminal entering the building or other restricted area, enters the coverage of one of the base stations in active mode, and that base station triggers the small cell base stations in the group in sleeping mode to switch to active mode. Preferably at least one small cell base station in the group informs its neighbouring small cell base stations in the group as to whether or not it has a likelihood of being accessed first among the group by user terminals.

Furthermore, preferably each small cell base station determines its own rate of location area updates. Preferably each small cell base station determines whether the rate of location area updates exceeds a given threshold, and, in consequence, indicates having or not having a likelihood of being accessed first among the group by user terminals.

Alternatively, preferably one small cell base station acts to determine, for each other small cell base station in the group, whether the rate of location area updates exceeds the given threshold, and, in consequence, indicates having or not having a likelihood of being accessed first among the group by user terminals. Alternatively, preferably a central server acts to, for each small cell base station in the group, determine whether the rate of location area updates exceeds the given threshold, and, in consequence, indicates having or not having a likelihood of being accessed first among the group by user terminals.

In some embodiments, small cell base stations within a group are each identified as a border cell or an inner cell based on location area updates received. In some embodiments, a small cell base station monitors for a period the number of location area updates that the small cell base station receives from user terminals within its coverage and compares that number against a threshold to determine whether the small cell base station is a border or inner cell. In some embodiments, once this classification is complete, the inner cells take a sleeping mode at off-peak times whereas the border cell base stations remain always active.

In some embodiments, for example at an entrance to a building, the first small cell base station in the group to receive an LAU from a user terminal transiting from connection to a macrocell base station is a border cell. In consequence, the border cell may wake up its sleeping neighbour small cell base stations. When all user terminals have left the coverage of the group of small cell base stations, for example, all user terminals have switched from connection to a border cell to connection with an external macrocell base station, the inner cells may be triggered to go into sleeping mode.

In some embodiments, a small cell base station can page or poll user terminals to determine whether or not they still reside in the coverage area.

In some embodiments, classification of the small cell base stations into inner cells and border cells may be useful for various methods; for example energy efficiency algorithms may use this classification to put inner cells in a building into sleeping mode when appropriate whilst keeping border cells active even when there are no user terminals present.

Some embodiments provide a technique to identify border cells and inner cells in a deployed group of metrocell base stations dependent on the rate of location area updates detected.

Some embodiments provide a mechanism for notifying a network regarding locations of user terminals when base stations have their pilot transmissions switched off, in other words, are in a sleeping mode.

The present invention also relates to a corresponding small cell base station. An example is a small cell base station comprising a predictor configured to predict whether a small cell base station in a group of neighbouring small cell base stations has a likelihood of being accessed first among the group by user terminals, the predictor comprising: a monitor configured to monitor the rate of location area updates that the small cell base station receives from user terminals entering the small cell provided by the small cell base station; a processor configured to determine whether the rate of location area updates exceeds a given threshold; and an indicator configured to indicate, upon the rate of location area updates exceeding the given threshold, that the small cell base station has a likelihood of being accessed first among the group by user terminals.

The present invention also relates to a cellular telecommunications network. An example is a cellular telecommunications network comprising a predictor configured to predict whether a small cell base station in a group of neighbouring base stations has a likelihood of being accessed first among the group by user terminals, the predictor comprising: a monitor configured to monitor the rate of location area updates that the small cell base station receives from user terminals entering the small cell provided by the small cell base station; a processor configured to determine whether the rate of location area updates exceeds a given threshold; and an indicator configured to indicate, upon the rate of location area updates exceeding the given threshold, that the small cell base station has a likelihood of being accessed first among the group by user terminals.

### Brief Description of the Drawings

Embodiments of the present invention will now be described by way of example and with reference to the drawings, in which:
Figure 1 is a diagram illustrating a known cellular wireless communications network (PRIOR ART),
Figure 2 is a diagram illustrating a cellular wireless communications network at a first time according to a first embodiment of the invention,
Figure 3 is a flowchart illustrating operation of one of the metrocell base stations shown in Figure 2 in classification based on location area updates,
Figure 4 is a diagram illustrating the network shown in Figure 2 at a later time after classification of the metrocells into border cells and inner cells,
Figure 5 shows coverage of a building by a network according to a second embodiment in which at a first time all small cells in a group are active, and
Figure 6 shows coverage of the building by the network according to the second embodiment at a later time after cells have been classified as border or inner, and the inner cells are now in sleeping mode.

### Detailed Description

The inventors realised that a group of small cells, for example femtocells or metrocells, may be deployed, for example in an indoor environment, in order to provide additional call/data capacity or improve radio coverage.

The inventors realised that, in known systems, for example as described with reference to Figure 1, the small cell base stations can employ energy efficient sleep mode algorithms, whereby a small cell base station disables its pilot transmissions and associated radio processing at times expected to have no user traffic. For example, a group of metrocell base stations deployed in an office building is only in use during office hours on weekdays, e.g. 9 to 10 hours each week day. At other times, the metrocell base stations may be put into a sleeping mode, in other words switched off, which saves power. The inventors realised that, in such known systems, when small cell base stations are in sleeping mode, a mobile user terminal that is in idle mode, and moving into the normal cell coverage area of the now-sleeping small cell base station, will not know that its location area has changed and the usual Location Area Update (LAU) to the network will not be triggered. Also, a mobile user terminal in idle mode moving out of the 'sleeping cell' will not know that it has left the old location area and entered a new location area. In consequence, the core network of the cellular network will not know the current location of an idle user terminal that is to be contacted to set up an incoming call or data session to that user terminal.

Turning now to the first embodiment, we now describe a network including small cell base stations then look in greater detail at classification into inner and border cells for the purpose of allowing inner cells to enter sleep mode, also known as idle mode, when appropriate.

As shown in Figure 2, a cellular telecommunications network 10 includes a macrocell base station 12 having a coverage area 14 within which a group 16 of small cells 18 are located. Each small cell 18 is provided by a corresponding small cell base station 20. In this example the small cells are metrocells.

In this example, the group 18 of small cells are in an indoor scenario. In other similar embodiment (not shown) the group of small cells are outdoors.

All the small cells 18 in the group 16 have the same identifying Location Area Code (LAC). This LAC is different to that of the 'underlying' macrocell 14. In this example, which is a Third Generation Partnership Project (3GPP) Heterogeneous Network (HetNet) , small cell base stations 20 provide the group 16 of small cells 18, and those small cell base stations 20 are connected to a common small cell gateway (not shown). Those small cell base stations 20 connected to the gateway share the same LAC.

Initially, at a first time t1, all the small cell base stations are in an active mode, as shown in Figure 2.

### Classification into 'inner' cells and 'border' cells

First the number of location area updates per period is monitored with appropriate deductions being made and averaging over repeated periods undertaken. Then the averaged number of location area updates per period is compared to a threshold to determine whether a small cell is an 'inner' cell or 'border' cell. This is described in more detail as follows.

### Gathering LUV per period data

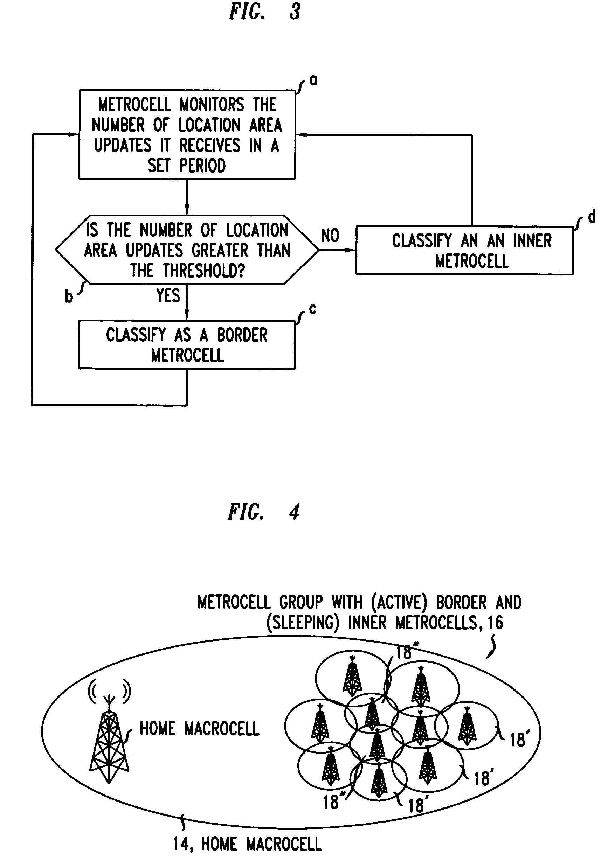

As shown in Figure 3, each small cell base station 20 monitors (step a) the number of location area update messages that it receives from user terminals over a set amount of time, for example over a 30 minute period or over a 24 hour period. In this example, the measure is repeated over multiple periods to calculate an averaged number of LAUs received per period (In another example, this averaging is not undertaken).

In this example, the group 16 of small cells 18 is within a building (not shown). Users passing by a window provide LAUs but as these users are not the intended users of the small cells, those LAUs are discounted from the statistics. This is done by taking account of the time period for which a user terminal is connected to one of the group of small cells. Specifically, a small cell base station keeps a record of the LAUs received from user terminals over a certain time period (e.g. 30 minutes) and at the end of that period the base stations polls those user terminals. If the user terminal does not return an indication that that user terminal is still present in the small cell, then the associated record of a LAU is disregarded. The LAUs associated with user terminals that do respond, are considered valid. User terminals that do not respond to this polling are typically ones that were merely passing by a window, whereas user terminals that do respond are within the building within which the small cell network is configured.

### Comparison to a threshold for classification of small cells

As shown in Figure 3, the average number of LAUs per period (in other words the LAU rate) is then compared (step b) to a predetermined threshold. If the average number of LAUs per period is greater than the threshold, the small cell is classified (step c) as a border cell of that group 16. Conversely, if average number of LAUs per period is lower than the threshold, then the small cell is classified (step d) as an inner cell of that group 16.

The classification into 'border' and 'inner' cells is based on comparing the determined valid-LAU reception rate to a predetermined threshold. In this example, one of the small cells receives the valid LAU reception rate data from other small cells in the group, performs the comparisons in order to determine which class (inner or border) each small cell in the group belongs to, and keeps a record of those.

In an alternative embodiment (not shown), each small cell base station determines for itself whether it is an inner cell or border cell by comparing its own valid-LAU reception rate to a given threshold.

Turning back to the description of the first embodiment, the process shown in Figure 3 is repeated for each small cell 18 of the group 16. Once all the small cells 18 have been classified as 'border' or 'inner', during periods of expected low/zero usage, the 'inner' cells enter sleep mode and switch off their transmissions. As shown in Figure 4, the group 16 of cells then has small cells 18' that have been classified as border cells, and small cells 18" that have been classified as inner cells. In border cells, the respective small cell base station is in active mode. In inner cells, the respective small cell base station is in sleeping mode.

### Inner cell wakeup

In this example, the inner cells 18" are in sleeping mode, also known as idle mode. The inner cell base stations monitor pilot signals from the border cell base stations that it neighbours. If any of the expected pilot signals are not received, in other words the border cell base station is switched off or fails so becomes undetected by the inner cell base station, then the inner cell base station wakes up and repeats the classification procedure described with reference to Figure 3. In consequence that inner cell may become reclassified as a border cell.

### Example Scenario

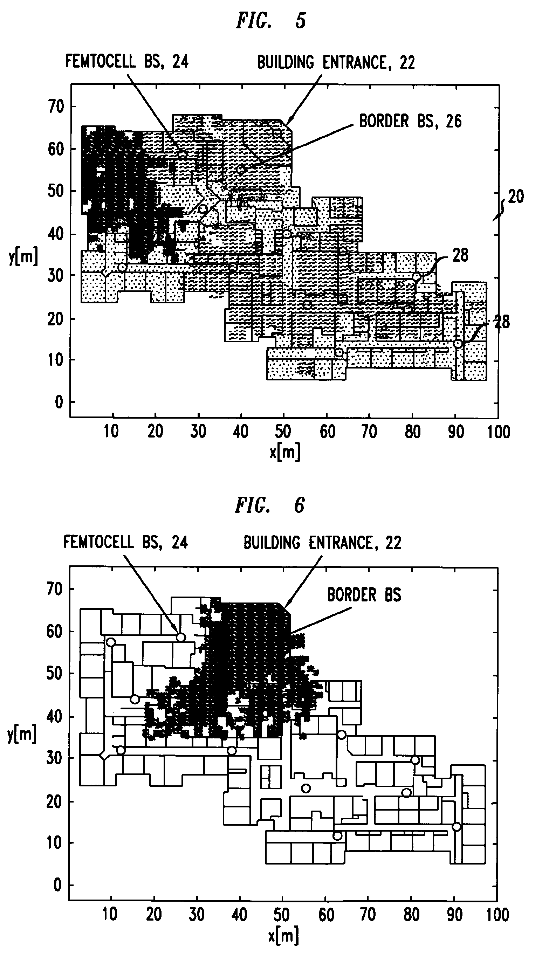

An example network according to a second embodiment is shown in Figures 5 and 6. The network at a first time is shown in Figure 5. The same network at a later time is shown in Figure 6.

The network includes a group of small cell base stations 24 of femtocell type deployed within an office building 20. The building 20 has a main entrance 22 via which users enter and exit. In Figures 5 and 6, the femtocells base stations 24 are shown as small circles.

The femtocell base station that provides radio coverage of the entrance 22 experiences a high rate of LAUs and is therefore classified as a border cell base station 26. The other femtocells base stations 24 experience much lower LAU rates so are classified as inner cell base stations 28.

As shown in Figure 6, after this classification is done, the border cell base station 26 keeps track of the comings and goings of user terminals into and out of the building, and the inner cell base stations are put into sleep mode whenever the number of users in the building is zero. The border cell base station remains active to detect a user terminal entering the building. Upon a user terminal being detected by the border cell base station, the base stations 28,24 of all the other cells in the group are triggered by the border cell base station to exit sleep mode so as to become active.

### Some Alternatives

In an alternative example, the classification of the small cells into inner cells and border cells is performed by a central server (not shown) for example a Small Cell Gateway that connects all the small cell base stations in the group to the rest of the network.

In an alternative example, the classification procedure into inner cells and border cells is repeated, based either on a predetermined or a pseudo-random schedule. Reclassification may be required if a small cell has been moved to a different location within the group of small cells or the group has been extended by further small cell base stations being added.

In an alternative example, the small cells within the group coordinate including to notify each other of their own (inner or border) status. This provides useful information to a small cell base station. For example, if a base station is notified that a neighbouring base station is an 'inner', the base station will expect the neighbouring base station to go into a sleep mode at certain periods of the day, and so change its own behaviour accordingly.

In an alternative example, the group of small cells (for example enterprise femtocells) supports only a closed subscribed group (CSG). In collecting statistics to determined valid-LAU reception rates, LAUs from user terminals who are not members of the closed subscriber group are simply ignored.

In some alternative embodiments, knowledge of the classification into inner cells and border cells may help in applications, for example, geo-fencing applications in which notifications and services are triggered by user terminals entering or exiting a certain area.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of predicting whether a small cell base station in a group of neighbouring small cell base stations (20) has a likelihood of being accessed first among the group by user terminals, **characterised by**
the group of neighbouring small cell base stations all have the same Location Area Code;
the method comprising:
monitoring (Fig 3:a) the rate of location area updates that the small cell base station receives from user terminals entering the small cell provided by the small cell base station;
determining (Fig 3:b) whether the rate of location area updates exceeds a given threshold; and
upon the rate of location area updates exceeding the given threshold the small cell base station being indicated (Fig 3:c) as having a likelihood of being accessed first among the group by user terminals.

2. A method of predicting according to claim 1, wherein upon the rate of location area updates not exceeding the given threshold, the small cell base station being indicated (Fig 3:d) as not having a likelihood of being accessed first among the group by user terminals.

3. A method according to claim 2, in which the small cell indicated as not having a likelihood of being accessed first among the group by user terminals is switched to a low power sleeping mode for expected periods of low usage.

4. A method according to claim 1, in which the small cell indicated as having a likelihood of being accessed first among the group by user terminals, is maintained in a high power active state at all times of the day or week.

5. A method according to any preceding claim, in which, in determining rate of Location Area Updates, Location Area Updates from user terminals that do not indicated their continued presence in the small cell at the end of a measurement period are discarded from the count of LAUs per given period.

6. A method according to any preceding claim, in which the small cell (18) has a closed subscriber group of user terminals and Location area updates from user terminals that are not in the closed subscriber group are not included in the count.

7. A method according to any preceding claim in which each small cell base station (20) determines its own rate of location area updates.

8. A method according to any preceding claim, in which the group of small cell base stations (24) is provided in a building or other area having restricted access, and at least one small cell base station (26) in the group is indicated as having a likelihood of being accessed first among the group by user terminals, and said other small cell base stations are indicated as not having a likelihood of being accessed first among the group by user terminals.

9. A method according to claim 8, in which said at least one base station indicated as having a likelihood of being accessed first among the group by user terminals is kept in active mode, and said other small cell base stations indicated as not having a likelihood of being accessed first among the group are at a time in sleeping mode.

10. A method according to claim 9, in which each of the small cells in sleeping mode in the group seeks to detect periodic pilot signals from a small cell base station in active mode in the group, and in the absence of receiving an expected pilot signal, a small cell base station in sleeping mode switches to active mode.

11. A method according to any of claims 8 to 10, in which each of said at least one base station is located near an entrance (22) to the building or other restricted area, and said other small cell base stations are inside the building or other restricted area further from an entrance.

12. A method according to any of claims 8 to 11, in which a user terminal entering the building or other restricted area, enters the coverage of one of the base stations in active mode, and that base station triggers the small cell base stations in the group in sleeping mode to switch to active mode.

13. A method according to any of claims 8 to 12, in which at least one small cell base station in the group informs its neighbouring small cell base stations in the group as to whether or not it has a likelihood of being accessed first among the group by user terminals.

14. A small cell base station or cellular telecommunications network comprising means for predicting whether a small cell base station in a group of neighbouring small cell base stations (20) has a likelihood of being accessed first in the group by user terminals,
**characterised in that**
the group of neighbouring small cell base stations all have the same Location Area Code; and
the means comprises:
means for monitoring (Fig 3:a) the rate of location area updates that the small cell base station receives from user terminals entering the small cell provided by the small cell base station;
means for determining (Fig 3:b) whether the rate of location area updates exceeds a given threshold;
means for indicating (Fig 3:c), upon the rate of location area updates exceeding the given threshold, that the small cell base station has a likelihood of being accessed first among the group by user terminals.

## Patentansprüche

1. Verfahren zur Vorhersage, ob es wahrscheinlich ist, dass auf eine kleinzellige Basisstation in einer Gruppe von benachbarten kleinzelligen Basisstationen (20) als Erste in der Gruppe von Benutzerendgeräten zugegriffen wird, **dadurch gekennzeichnet, dass**
in der Gruppe von benachbarten kleinzelligen Basisstationen alle die gleiche Aufenthaltsbereichskennzahl haben;
wobei das Verfahren Folgendes umfasst:
Überwachen (Fig. 3:a) der Rate von Aufenthaltsbereichsaktualisierungen, welche die kleinzellige Basisstation von Benutzerendgeräten empfängt, die in die Kleinzelle eintreten, welche von der kleinzelligen Basisstation bereitgestellt wird;
bestimmen (Fig. 3:b), ob die Rate von Aufenthaltsbereichsaktualisierungen einen gegebenen Grenzwert überschreitet; und
nachdem die Rate von Aufenthaltsbereichsaktualisierungen den gegebenen Grenzwert überschritten hat, Angeben (Fig. 3:c), dass es wahrscheinlich ist, dass auf die kleinzellige Basisstation als Erste in der Gruppe von Benutzerendgeräten zugegriffen wird.

2. Verfahren zur Vorhersage nach Anspruch 1, wobei, nachdem die Rate von Aufenthaltsbereichsaktualisierungen den gegebenen Grenzwert nicht überschritten hat, angegeben wird (Fig. 3:d), dass es nicht wahrscheinlich ist, dass auf die kleinzellige Basisstation als Erste in der Gruppe von Benutzerendgeräten zugegriffen wird.

3. Verfahren nach Anspruch 2, wobei die Kleinzelle, für die angegeben wird, dass es nicht wahrscheinlich ist, dass als Erste in der Gruppe von Benutzerendgeräten auf sie zugegriffen wird, auf einen stromsparenden Schlafmodus für den erwarteten Zeitraum geringer Nutzung geschaltet wird.

4. Verfahren nach Anspruch 1, wobei die Kleinzelle, für die angegeben wird, dass es wahrscheinlich ist, dass als Erste in der Gruppe von Benutzerendgeräten auf sie zugegriffen wird, den ganzen Tag oder die ganze Woche in einem aktiven Hochleistungszustand gehalten wird.

5. Verfahren nach einem beliebigen vorstehenden Anspruch, wobei, beim Bestimmen der Rate von Aufenthaltsbereichsaktualisierungen, Aufenthaltsbereichsaktualisierungen von Benutzerendgeräten, welche nicht ihre durchgehende Anwesenheit in der Kleinzelle am Ende eines Messzeitraums angeben, aus der Zählung von LAUs pro gegebenem Zeitraum ausgeschieden werden.

6. Verfahren nach einem beliebigen vorstehenden Anspruch, wobei die Kleinzelle (18) eine geschlossene Teilnehmergruppe von Benutzerendgeräten hat und Aufenthaltsbereichsaktualisierungen von Benutzerendgeräten, die nicht in der geschlossenen Teilnehmergruppe sind, nicht in die Zählung eingeschlossen werden.

7. Verfahren nach einem beliebigen vorstehenden Anspruch, wobei jede kleinzellige Basisstation (20) ihre eigene Rate von Aufenthaltsbereichsaktualisierungen bestimmt.

8. Verfahren nach einem beliebigen vorstehenden Anspruch, wobei die Gruppe von kleinzelligen Basisstationen (24) in einem Gebäude oder anderen Bereich mit beschränktem Zugang bereitgestellt wird, und für mindestens eine kleinzellige Basisstation (26) in der Gruppe angegeben wird, dass es wahrscheinlich ist, dass als Erste in der Gruppe von Benutzerendgeräten auf sie zugegriffen wird, und für die besagten anderen kleinzelligen Basisstationen angegeben wird, dass es nicht wahrscheinlich ist, dass als Erste in der Gruppe von Benutzerendgeräten auf sie zugegriffen wird.

9. Verfahren nach Anspruch 8, wobei besagte mindestens eine Basisstation, für die angegeben wird, dass es wahrscheinlich ist, dass als Erste in der Gruppe von Benutzerendgeräten auf sie zugegriffen wird, in aktivem Modus gehalten wird, und die besagten anderen kleinzelligen Basisstationen, für die angegeben wird, dass es nicht wahrscheinlich ist, dass als Erste in der Gruppe von Benutzerendgeräten auf sie zugegriffen wird, jeweils im Schlafmodus sind.

10. Verfahren nach Anspruch 9, wobei jede der Kleinzellen im Schlafmodus in der Gruppe versucht, periodische Pilotsignale von einer kleinzelligen Basisstation in aktivem Modus in der Gruppe zu erfassen, und mangels des Empfangs eines erwarteten Pilotsignals, eine kleinzellige Basisstation im Schlafmodus auf aktiven Modus schaltet.

11. Verfahren nach einem beliebigen der Ansprüche 8 bis 10, wobei jede der besagten mindestens einen Basisstation in der Nähe eines Eingangs (22) zum Gebäude oder anderen beschränkten Bereich angeordnet ist, und sich die besagten anderen kleinzelligen Basisstationen innerhalb des Gebäudes oder anderen beschränkten Bereichs, entfernt von einem Eingang, befinden.

12. Verfahren nach einem beliebigen der Ansprüche 8 bis 11, wobei ein Benutzerendgerät, das in das Gebäude oder den anderen beschränkten Bereich eintritt, in die Abdeckung von einer der Basisstationen in aktivem Modus eintritt, und diese Basisstation die kleinzelligen Basisstationen in der Gruppe im Schlafmodus veranlasst, auf aktiven Modus zu schalten.

13. Verfahren nach einem beliebigen der Ansprüche 8 bis 12, wobei mindestens eine kleinzellige Basisstation in der Gruppe ihre benachbarten kleinzelligen Basisstationen in der Gruppe darüber informiert, ob es wahrscheinlich ist oder nicht, dass als Erste in der Gruppe von Benutzerendgeräten auf sie zugegriffen wird.

14. Kleinzellige Basisstation oder zellulares Telekommunikationsnetzwerk, umfassend Mittel zur Vorhersage, ob es wahrscheinlich ist, dass auf eine kleinzellige Basisstation in einer Gruppe von benachbarten kleinzelligen Basisstationen (20) als Erste in der Gruppe von Benutzerendgeräten zugegriffen wird,
**dadurch gekennzeichnet, dass**
in der Gruppe von benachbarten kleinzelligen Basisstationen alle die gleiche Aufenthaltsbereichskennzahl haben; und
die Mittel Folgendes umfassen:
Mittel zum Überwachen (Fig. 3:a) der Rate von Aufenthaltsbereichsaktualisierungen, welche die kleinzellige Basisstation von Benutzerendgeräten empfängt, die in die Kleinzelle eintreten, welche von der kleinzelligen Basisstation bereitgestellt wird;
Mittel zum Bestimmen (Fig. 3:b), ob die Rate von Aufenthaltsbereichsaktualisierungen einen gegebenen Grenzwert überschreitet;
Mittel zum Angeben (Fig. 3:c), nachdem die Rate von Aufenthaltsbereichsaktualisierungen den gegebenen Grenzwert überschritten hat, dass es wahrscheinlich ist, dass auf die kleinzellige Basisstation als Erste in der Gruppe von Benutzerendgeräten zugegriffen wird.

## Revendications

1. Procédé permettant de prévoir si des terminaux d'utilisateurs sont susceptibles d'accéder en premier à une station de base à petites cellules parmi un groupe de stations de base à petites cellules voisines (20), **caractérisé en ce que**
toutes les stations de base à petites cellules voisines du groupe présentent le même code de zone de localisation ;
le procédé comprenant les étapes suivantes :
surveiller (Figure 3:a) le taux des mises à jour de zone de localisation que la station de base à petites cellules reçoit des terminaux d'utilisateurs entrant dans la petite cellule fournie par la station de base à petites cellules ;
déterminer (Fig 3:b) si le taux des mises à jour de zone de localisation dépasse un seuil donné ; et
lorsque le taux des mises à jour de zone de localisation dépasse le seuil donné, on signale (Fig 3:c) que des terminaux d'utilisateurs sont susceptibles d'accéder en premier à la station de base à petites cellules parmi le groupe.

2. Procédé de prédiction selon la revendication 1, dans lequel lorsque le taux des mises à jour de zone de localisation ne dépasse pas le seuil donné, on signale (Fig 3:d) que des terminaux d'utilisateurs ne sont pas susceptibles d'accéder en premier à la station de base à petites cellules parmi le groupe.

3. Procédé selon la revendication 2, dans lequel la petite cellule, à laquelle on signale que des terminaux d'utilisateurs ne sont pas susceptibles d'accéder en premier parmi le groupe, passe en mode sommeil à faible puissance pendant des périodes prévues de faible utilisation.

4. Procédé selon la revendication 1, dans lequel la petite cellule, à laquelle on signale que des terminaux d'utilisateurs sont susceptibles d'accéder en premier parmi le groupe, est maintenue dans un état actif à forte puissance à toute heure du jour ou de la semaine.

5. Procédé selon l'une quelconque des revendications précédentes, dans lequel, en déterminant le taux des mises à jour de zone de localisation, les mises à jour de zone de localisation des terminaux d'utilisateurs, qui ne signalent pas leur présence continue dans la petite cellule à la fin d'une période de mesure, sont éliminées du décompte de mises à jour de zone de localisation par période donnée.

6. Procédé selon l'une quelconque des revendications précédentes, dans lequel la petite cellule (18) présente un groupe d'abonnés fermé de terminaux d'utilisateurs et les mises à jour de zone de localisation de terminaux d'utilisateurs qui ne sont pas dans le groupe d'abonnés fermé ne sont pas incluses dans le décompte.

7. Procédé selon l'une quelconque des revendications précédentes, dans lequel chaque station de base à petites cellules (20) détermine son propre taux de mises à jour de zone de localisation.

8. Procédé selon l'une quelconque des revendications précédentes, dans lequel le groupe de stations de base à petites cellules (24) est prévu dans un bâtiment ou une autre zone à accès limité, et on signale que des terminaux d'utilisateurs sont susceptibles d'accéder en premier au moins à une station de base à petites cellules parmi le groupe, et on signale que des terminaux d'utilisateurs ne sont pas susceptibles d'accéder en premier auxdites autres stations de base à petites cellules parmi le groupe.

9. Procédé selon la revendication 8, dans laquelle ladite au moins une station de base, à laquelle on signale que des terminaux d'utilisateurs sont susceptibles d'accéder en premier parmi le groupe, est maintenue en mode actif, et lesdites autres stations de base à petites cellules, auxquelles on signale que des terminaux d'utilisateurs ne sont pas susceptibles d'accéder en premier parmi le groupe, sont simultanément en mode sommeil.

10. Procédé selon la revendication 9, dans lequel chacune des petites cellules en mode sommeil dans le groupe cherche à détecter des signaux pilotes périodiques provenant d'une station de base à petites cellules en mode actif dans le groupe et, en l'absence de réception d'un signal pilote prévu, une station de base à petites cellules en mode sommeil passe en mode actif.

11. Procédé selon l'une quelconque des revendications 8 à 10, dans lequel chacune desdites au moins une station de base est localisée à proximité d'une entrée (22) du bâtiment ou d'une autre zone à accès limité, et lesdites autres stations de base à petites cellules sont à l'intérieur du bâtiment ou d'une autre zone à accès limité plus éloignée d'une entrée.

12. Procédé selon l'une quelconque des revendications 8 à 11, dans lequel un terminal utilisateur, entrant dans le bâtiment ou dans une autre zone à accès limité, entre dans la couverture d'une des stations de base en mode actif, et cette station de base déclenche le passage en mode actif des stations de base à petites cellules dans le groupe en mode sommeil.

13. Procédé selon l'une quelconque des revendications 8 à 12, dans lequel au moins une station de base à petites cellules dans le groupe signale à ses stations de base à petites cellules voisines dans le groupe si des terminaux d'utilisateurs sont susceptibles ou non d'y accéder en premier parmi le groupe.

14. Station de base à petites cellules ou réseau de télécommunication cellulaire comprenant des moyens permettant de prévoir si des terminaux d'utilisateurs sont susceptibles d'accéder en premier à une station de base à petites cellules dans un groupe de stations de base à petites cellules voisines (20),
**caractérisée en ce que**
toutes les stations de base à petites cellules voisines du groupe présentent le même code de zone de localisation ; et
les moyens comprennent :
des moyens pour surveiller (Fig 3:a) le taux des mises à jour de zone de localisation que la station de base à petites cellules reçoit des terminaux d'utilisateurs entrant dans la petite cellule fournie par la station de base à petites cellules ;
des moyens pour déterminer (Fig 3:b) si le taux des mises à jour de zone de localisation dépasse un seuil donné ;
des moyens pour signaler (Fig 3:c), lorsque le taux des mises à jour de zone de localisation dépasse le seuil donné, que des terminaux d'utilisateurs sont susceptibles d'accéder en premier à la station de base à petites cellules parmi le groupe.
